(19) Europäisches Patentamt
European Patent Office
Office européen des brevets

(11) **EP 4 722 701 A1**

(12) **EUROPEAN PATENT APPLICATION**

(43) Date of publication:
08.04.2026 Bulletin 2026/15

(21) Application number: 24204971.6

(22) Date of filing: 07.10.2024

(51) International Patent Classification (IPC):
*G01N 25/00* (2006.01)     *G01N 25/18* (2006.01)

(52) Cooperative Patent Classification (CPC):
G01N 25/18; G01N 25/005

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Netzsch Gerätebau GmbH
95100 Selb (DE)

(72) Inventors:
• SHINODA, Yoshio
 Kanagawa 221-0022 (JP)
• BABA, Tetsuya
 Ibaraki 302-0124 (JP)

(74) Representative: Isarpatent
Patent- und Rechtsanwälte
Barth Hassa Peckmann & Partner mbB
Friedrichstraße 31
80801 München (DE)

(54) **THERMOPHYSICAL PROPERTY VALUE MEASUREMENT DEVICE AND THERMOPHYSICAL PROPERTY VALUE MEASUREMENT METHOD**

(57) It is provided new thermophysical property value measurement device and thermophysical property value measurement method, which can enhance measurement accuracy of a thermophysical property value by increasing the S/N ratio of a measurement signal, while preventing a measurement target member from being damaged and a thermophysical property from varying due to unintended temperature rise, in measurement of the thermophysical property value by a flash method. A thermophysical property value measurement device 100 according to the present disclosure includes: a light emitting unit 20 that irradiates a measurement target member S with a pulsed light that periodically flashes; and a computation unit 62 that computes periodic temperature data from a temperature measuring unit 30. The computation unit 62 generates a periodic temperature spectrum from the periodic temperature data, retrieves a periodic pulse temperature spectrum analytical solution acquired from a theoretical formula of temperature change by a single pulsed light, calculates respective parameters of the periodic pulse temperature spectrum analytical solution, supposing that the periodic pulse temperature spectrum analytical solution matches the periodic temperature spectrum, and calculates a thermophysical property value of the measurement target member S, based on the calculated respective parameters.

FIG. 1

## Description

TECHNICAL FIELD

The present disclosure relates to a thermophysical property value measurement device and a thermophysical property value measurement method.

BACKGROUND

In recent years, as a method for measuring thermophysical property values such as a thermal diffusivity of a sample, it is used a flash method of measuring, in a non-contact manner, temperature rise of the backside temperature of a plate and parallel sample when the sample is irradiated with a pulsed light. This flash method has characteristics that the measurement time is short and the operation in measurement is easy. Moreover, in the flash method, the thermophysical property values are measured without contacting the sample, thus having an advantage that contact thermal resistance, etc. is not included in the uncertainty factor (e.g., PTLs 1 and 2, and NPLs 1 to 3).

CITATION LIST

Patent Literature

PTL 1: JPH08-261967A
PTL 2: JP2005-249427A

Non-patent Literature

NPL 1: T. Baba, A. Ono, "Improvement of the laser flash method to reduce uncertainty in thermal diffusivity measurements", MEASUREMENT SCIENCE AND TECHNOLOGY, Volume 12, Issue 12 p. 2046 - 2057, DOI10.1088/0957-0233/12/12/304.
NPL 2: K. Shinzato, T, Baba, "A laser flash apparatus for thermal diffusivity and specific heat capacity measurements", JOURNAL OF THERMAL ANALYSIS AND CALORIMETRY, Volume 64, Issue 1, p. 413 - 422, DOI10.1023/A:1011594609521,
NPL 3: T. Baba, "Analysis of One-dimensional Heat Diffusion after Light Pulse Heating by the Response Function Method", JAPANESE JOURNAL OF APPLIED PHYSICS, Volume 48, Issue 5, DOI10.1143/JJAP.48.05EB04.

SUMMARY

(Technical Problem)

When the flash method is used, irradiation with a single pulsed light increases the temperature of a measurement target member to acquire a measurement signal. Thus, in some cases, a S/N ratio of the measured signal cannot be sufficiently secured. In addition, if the light intensity of the pulsed light for irradiation is increased to acquire the S/N ratio of the measurement signal, the measurement target member may be thermally damaged, or the temperature rise of the measurement target member may change the thermophysical property itself. There is thus room for improvement in these points.

The present disclosure has been made in view of the problems as noted above, and it could be helpful to provide new thermophysical property value measurement device and thermophysical property value measurement method, which can enhance measurement accuracy of a thermophysical property value by increasing the S/N ratio of a measurement signal, while preventing a measurement target member from being damaged and a thermophysical property from varying due to unintended temperature rise, in measurement of the thermophysical property value by a flash method.

(Solution to Problem)

For solving the problem as noted above, the present disclosure provides

[1] a thermophysical property value measurement device including:

a light emitting unit that irradiates a measurement target member with a pulsed light that periodically flashes;
a temperature measuring unit that measures a temperature of the measurement target member; and
a computation unit that computes periodic temperature data from the temperature measuring unit,
wherein the computation unit

acquires a periodic temperature spectrum generated from the periodic temperature data,
retrieves a periodic pulse temperature spectrum analytical solution acquired from a theoretical formula of temperature change when irradiating the measurement target member with a single pulsed light,
calculates respective parameters of the periodic pulse temperature spectrum analytical solution, supposing that the periodic pulse temperature spectrum analytical solution matches the periodic temperature spectrum, and
calculates a thermophysical property value of the measurement target member, based on the calculated respective parameters of the periodic pulse temperature spectrum analytical solution.

In the thermophysical property value measurement device according to the present disclosure,
[2] with the configuration according to [1] above, it is preferred that the computation unit acquires the periodic temperature spectrum generated by applying fast Fourier transformation to the periodic temperature data or inputting the periodic temperature data to a spectrum analyzer.
In the thermophysical property value measurement device according to the present disclosure,
[3] with the configuration according to [1] or [2] above, it is preferred that the computation unit corrects drift of the periodic temperature data.
In the thermophysical property value measurement device according to the present disclosure,
[4] with the configuration according to any one of [1] to [3] above, it is preferred that the computation unit provides an amount of correction that linearly varies with time, to the periodic temperature data under continuous temperature rising or under continuous temperature falling of the measurement target member to correct the periodic temperature data.
In the thermophysical property value measurement device according to the present disclosure,
[5] with the configuration according to any one of [1] to [3] above, it is preferred to further include: a heating unit that heats the measurement target member; and a control unit that controls the heating unit, wherein the control unit changes the temperature of the measurement target member by control of the heating unit, and the computation unit corrects the periodic temperature data based on a low frequency component in the temperature change of the measurement target member.
In the thermophysical property value measurement device according to the present disclosure,
[6] with the configuration according to any one of [1] to [5] above, it is preferred that the measurement target member is located on a substrate, the periodic pulse temperature spectrum analytical solution includes a parameter that represents an interface thermal resistance between the substrate and the measurement target member, and under a condition that the thermal effusivity of the substrate is known, the computation unit calculates at least one of the heat capacity per unit volume and the thermal conductivity in the thickness direction, as a thermophysical property value of the measurement target member, which is a bulk.
For solving the problem as noted above, the present disclosure provides
[7] a thermophysical property value measurement method including:

irradiating a measurement target member with a pulsed light that periodically flashes;
measuring a temperature of the measurement target member as periodic temperature data;
generating a periodic temperature spectrum from the periodic temperature data;
retrieving a periodic pulse temperature spectrum analytical solution acquired from a theoretical formula of temperature change when irradiating the measurement target member with a single pulsed light;
calculating respective parameters of the periodic pulse temperature spectrum analytical solution, supposing that the periodic pulse temperature spectrum analytical solution matches the periodic temperature spectrum; and
calculating a thermophysical property value of the measurement target member, based on the calculated respective parameters of the periodic pulse temperature spectrum analytical solution.

(Advantageous Effect)

The present disclosure makes it possible to provide new thermophysical property value measurement device and thermophysical property value measurement method, which can enhance measurement accuracy of a thermophysical property value by increasing the S/N ratio of a measurement signal, while preventing a measurement target member from being damaged and a thermophysical property from varying due to unintended temperature rise, in measurement of the thermophysical property value by a flash method.

BRIEF DESCRIPTION OF THE DRAWINGS

In the accompanying drawings:

FIG. 1 is a view illustrating the configuration of a thermophysical property value measurement device according to one of the disclosed embodiments;
FIG. 2A is a view illustrating the configuration of a light emitting unit and a temperature measuring unit used for a flash method;
FIG. 2B is a view illustrating the relation between the time and the temperature change of a measurement target member in a conventional flash method;
FIG. 3 is a view illustrating a light emission waveform of periodic pulsed lights with which the measurement target member is irradiated from the light emitting unit, in the thermophysical property value measurement device according to one of the embodiments;
FIG. 4 is a view illustrating a temperature change (periodic temperature data) of the measurement target member, which is measured by the temperature measuring unit, in the thermophysical property value measurement device according to one of the embodiments;
FIG. 5 is a flow chart illustrating the procedure for carrying out a thermophysical property value measurement method according to one of the embodiments;

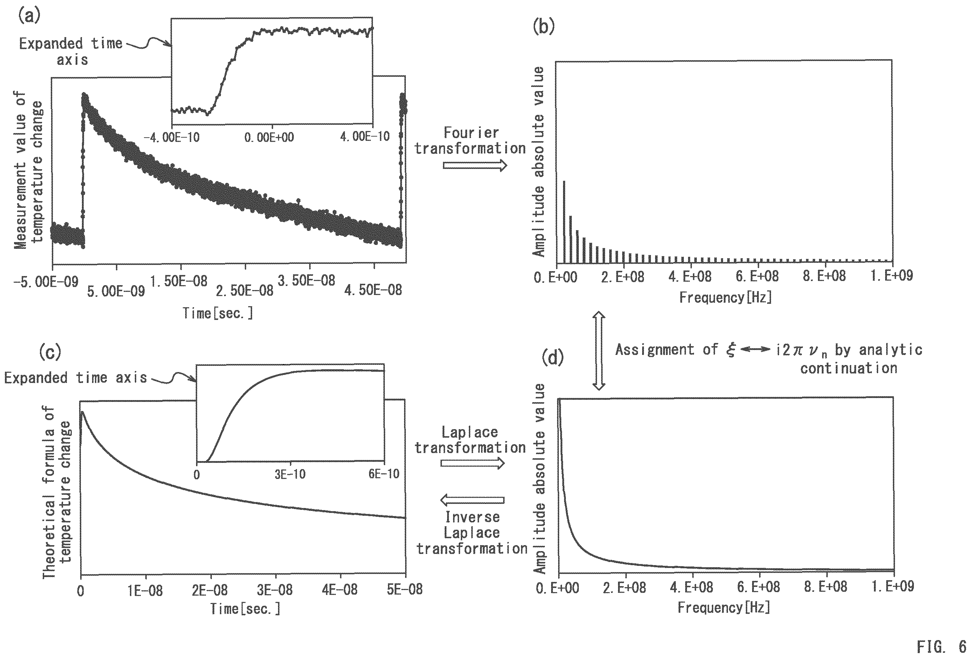

FIG. 6 is a view in which (a) is a time axis waveform of a periodic temperature change (for one period) of the measurement target member, which is measured by the temperature measuring unit; (b) is a periodic temperature spectrum generated by applying Fourier transformation to the time axis waveform in (a); (c) is a time axis waveform illustrating a theoretical formula of temperature change when the measurement target member is irradiated with a single pulsed light; (d) illustrates a single pulse temperature spectrum analytical solution generated by applying Laplace transformation to the time axis waveform in (c);
FIG. 7 is a view illustrating a temperature change (periodic temperature data in a case of continuous temperature rising) of the measurement target member, which is measured by the temperature measuring unit, in the thermophysical property value measurement device according to one of the embodiments;
FIG. 8 is a view illustrating one example of correction of the periodic temperature data;
FIG. 9 is a view illustrating the configuration of a thermophysical property value measurement device according to one of the embodiments (case where the measurement target member is located on a substrate); and
FIG. 10 is a view illustrating a model considering an interface thermal resistance between the substrate and the measurement target member.

DETAILED DESCRIPTION

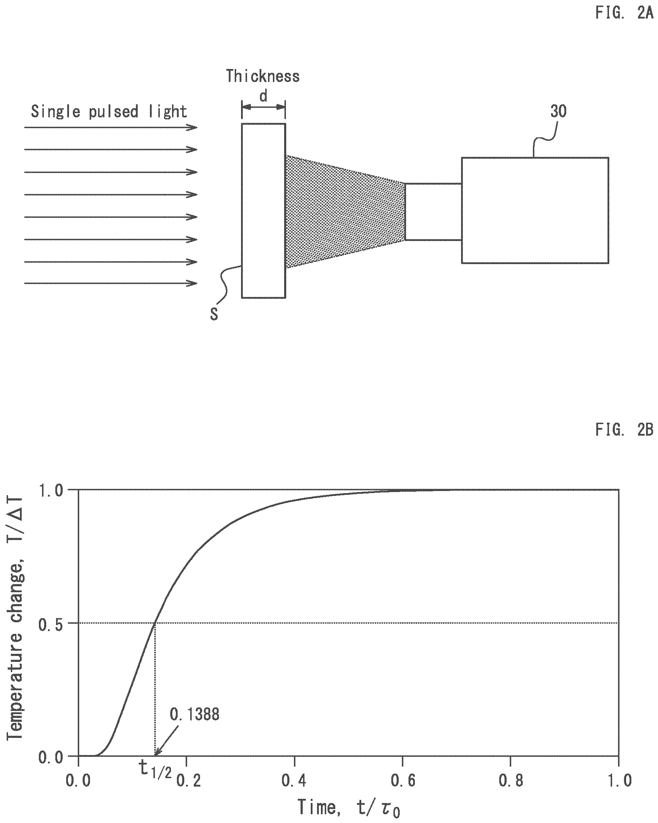

Hereinafter, embodiments according to the present disclosure will be described in detail with reference to the drawings.

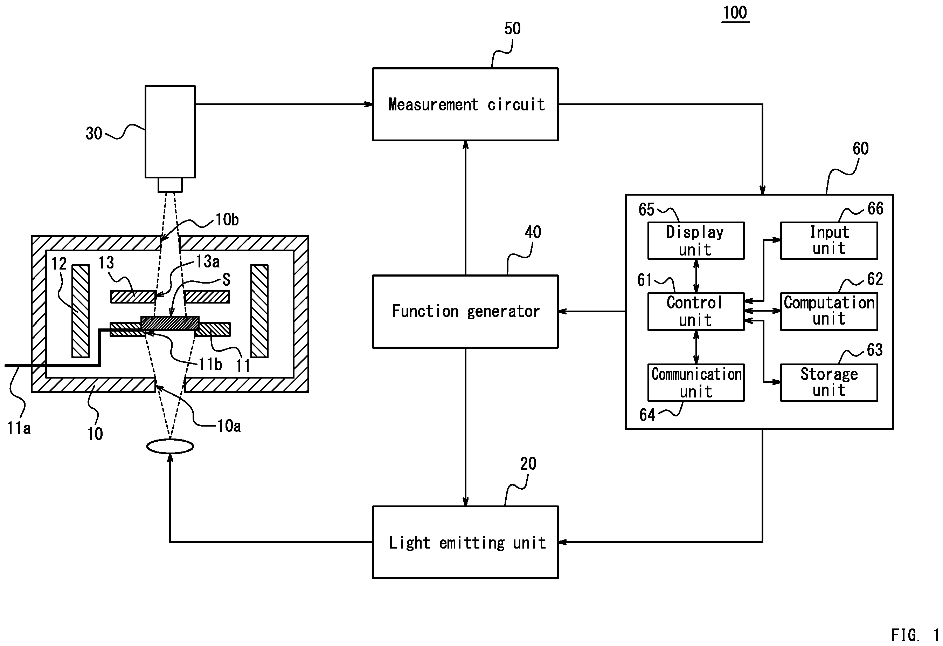

FIG. 1 is a view illustrating the configuration of a thermophysical property value measurement device 100 according to one of the disclosed embodiments. The thermophysical property value measurement device 100 according to this embodiment includes: a measurement container 10 that internally houses a tabular measurement target member S; a light emitting unit 20 that periodically generates a pulsed light to irradiate the measurement target member S; a temperature measuring unit 30 that measures a temperature of the other surface (upper surface in FIG. 1) opposite to one surface (lower surface in FIG. 1) irradiated with the pulsed light in the measurement target member S; and a computation unit 62 that computes periodic temperature data acquired from the temperature measuring unit 30.
Here, the measurement principle of a flash method employed in the thermophysical property value measurement device 100 according to one of the embodiments is described.
In the flash method, as illustrated in FIG. 2A, one surface of the measurement target member S with a thickness d is irradiated with a pulsed light, and the temperature measuring unit 30 such as an infrared detector measures a temperature of the surface opposite to the one surface. In the conventional flash method, one surface of the measurement target member S is irradiated with a single pulsed light, and a temperature change $T(t)$ on the opposite surface at this time is upward based on a theoretical formula expressed by the following mathematical formula (1), according to Reference Literatures 1 and 2 and NPLs 1 and 3.
[Mathematical 1]

$$T(t) = \Delta T \cdot \left[ 1 + 2 \sum_{n=1}^{\infty} (-1)^n \exp\left(-(n\pi)^2 \frac{t}{\tau_0}\right) \right]$$

$$= \frac{2}{b\sqrt{\pi t}} \sum_{n=0}^{\infty} \exp\left(-(2n+1)^2 \frac{\tau_0}{4t}\right) \quad (1)$$

wherein $\Delta T = c\rho d$ is the maximum value of temperature change, $\tau_0$ is a characteristic time of thermal diffusion, n is an integer of 0 or more, $b = \sqrt{(\lambda c\rho)}$ is a thermal effusivity of a target member, and $\lambda$, c, and $\rho$ are a thermal conductivity, a specific heat capacity, and a density of the target member, respectively.

(Reference Literature 1) W. J. Parker, R. J. Jenkins, C. P. Butler, and G. L. Abbott, "Flash Method of Determining Thermal Diffusivity, Heat Capacity, and Thermal Conductivity", J. Appl. Phys. 32, 1679 (1961)
(Reference Literature 2) T. Baba, N. Taketoshi, T. Yagi, "Development of Ultrafast Laser Flash Methods for Measuring Thermophysical Properties of Thin Films and Boundary Thermal Resistances", Jpn. J. Appl. Phys. 50(11), 11RA01 (2011).

In addition, $\tau_0$ in the mathematical formula (1) is a characteristic time of thermal diffusion and can be expressed by the following mathematical formula (2).
[Mathematical 2]

$$\tau_0 = \frac{d^2}{\alpha} \quad (2)$$

wherein d is a thickness of the measurement target member S, and $\alpha$ is a thermal diffusivity.
The temperature change T(t) of the surface opposite to one surface irradiated with a pulsed light in the measurement target member S, which is expressed by the mathematical formula (1), draws a rising curve as illustrated in FIG. 2B. Here, a time $t_{1/2}$ at which the temperature change T(t) becomes the half value of the maximum value $\Delta T$ in the temperature change is 0.1388 when it is standardized by $\tau_0$. Thus, the thermal diffusivity $\alpha$ can be determined by the following mathematical formula (3).
[Mathematical 3]

$$\alpha = \frac{d^2}{\tau_0} = 0.1388 \frac{d^2}{t_{1/2}} \quad (3)$$

In the flash method, from a viewpoint of measurement accuracy, etc., a measurement target member S with a characteristic time $\tau_0$ of thermal diffusion calculated by the mathematical formula (2) of 500 $\mu$sec. or more is preferably a measurement target. In the description, claims, and drawings of this application, a measurement target member S having a thickness d such that the characteristic time $\tau_0$ of thermal diffusion suitable for the measurement by the flash method is 500 $\mu$sec. or more is defined as a bulk (thick film). Moreover, a measurement target member S having a thickness d such that the characteristic time $\tau_0$ of thermal diffusion is less than 500 $\mu$sec. is defined as a thin film. Here, b and $\tau_0$ in the mathematical formula (1) are the thermal effusivity and the characteristic time of thermal diffusion of a bulk measurement target member S, respectively.
The thermophysical property value measurement device 100 according to this embodiment is further detailed. In this embodiment, a sample holder 11, which holds the measurement target member S, a cylindrical furnace 12, which surrounds the measurement target member S from outside in the radial direction and adjusts the temperature inside the measurement container 10 to a predetermined temperature, and an opening plate 13, which is located at the temperature measuring unit 30 side with respect to the sample holder 11 and limits the range of temperature measurement by the temperature measuring unit 30 by an opening 13a, are located inside the measurement container 10.
The sample holder 11 is formed into a tabular shape, provided with an opening 11b at an approximate center part in the planar direction, and formed of a material with low thermal conductivity. The opening 11b limits the irradiation area of periodic pulsed lights from the light emitting unit 20, with which the measurement target member S is irradiated. In addition, a temperature detector 11a that detects a temperature of the measurement target member S is located near the measurement target member S on the sample holder 11. For example, a thermocouple acquired by joining platinum-rhodium alloy (PtRh) and platinum (Pt) can be used for the temperature detector 11a. The temperature detector 11a measures not a temperature rise of the measurement target member S by irradiation with a pulsed light but a temperature (low frequency component) of the measurement target member S heated by the furnace 12. The low frequency component can be, for example, a frequency component of 1 Hz or less. The material of the sample holder 11 can be, for example, a metallic material.

The measurement container 10 is provided with an incidence opening 10a through which the pulsed light from the light emitting unit 20 passes and a backside opening 10b for monitoring of thermal radiation from the other surface (upper surface in FIG. 1) of the measurement target member S by the temperature measuring unit 30.

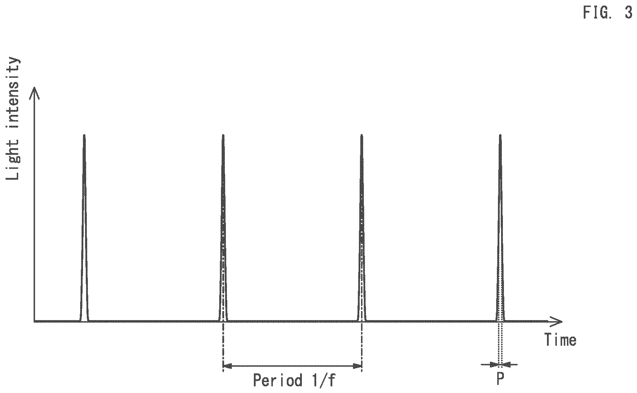

The light emitting unit 20 periodically generates a pulsed light. The light emitting unit 20, for example, actuates a function generator 40 by a command from a control unit 61 in a computer 60, causes an excitation light source to emit light, based on a timing signal from the function generator 40, and then, causes a Nd:YAG laser (wavelength: 1060 nm) or a semiconductor laser to emit light, for example, with a period $1/f$ ($f$ is a frequency of the pulsed light) as illustrated in FIG. 3. In FIG. 3, the horizontal axis indicates a time, the vertical axis indicates a light intensity, and a pulse with a pulse width P is generated with the period $1/f$. Here, the pulse width P is a time interval between the half value point from the rising of the pulse to the peak power and the half value point of the falling of the pulse. FIG. 3 illustrates the pulse width P expanded in the time axis direction. The light emitting unit 20 sets the pulse width P by a command from the control unit 61.

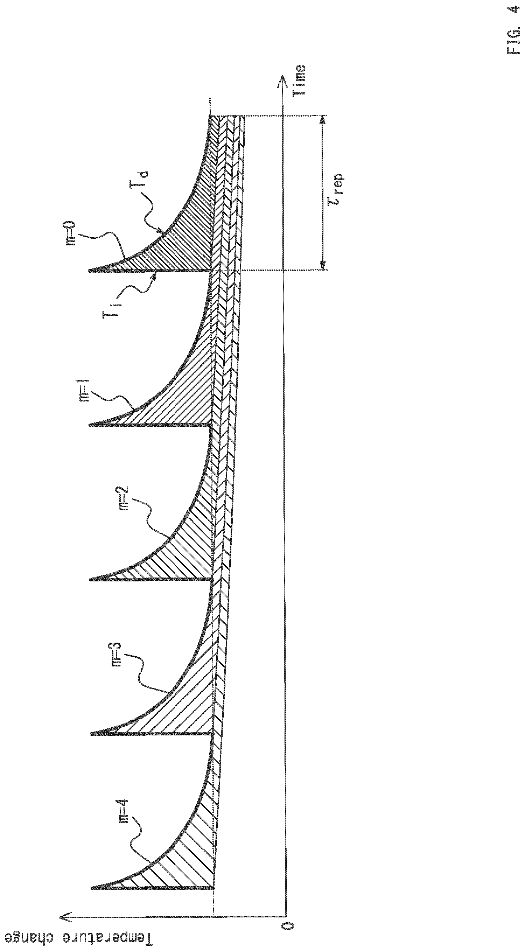

In this embodiment, the temperature measuring unit 30 is an infrared detector, which detects thermal radiation from the other surface (upper surface in FIG. 1) of the measurement target member S. The output from the temperature measuring unit 30 indicates a temperature change that periodically repeats a sawtooth change, as illustrated in FIG. 4. In FIG. 4, a time $\tau_{rep}$ corresponds to the period $1/f$ in a case of periodic irradiation with the pulsed light at a frequency f.

In FIG. 1, the measurement circuit 50 acquires a temperature change $T_{rep}(t)$ from the temperature measuring unit 30 every time (period) $\tau_{rep}$ based on the timing signal from the function generator 40 to send the temperature change $T_{rep}(t)$ as periodic temperature data to the computation unit 62 in the computer 60.

The period $1/f$ of the pulsed light that periodically flashes can be, for example, 20 $\mu$sec. to 1 sec. That is, the frequency f of the pulsed light can be 1 Hz to 50 kHz. The number of acquisition of the temperature change $T_{rep}(t)$ every $\tau_{rep}$ by the temperature measuring unit 30 can be, for example, around 10 to 10000. In this case, the acquisition time of the periodic temperature data is 0.2 sec. to 10 sec., and the measurement can be performed in a short time.

The computer 60 includes: the control unit 61 that controls the light emitting unit 20, the function generator 40, etc. by sending a command; the computation unit 62 that computes the periodic temperature data acquired from the temperature measuring unit 30, etc., and a storage unit 63 that stores the acquired data and computation result thereof. The computation unit 62 may be configured as one functional unit included in the control unit 61. The control unit 61 and the computation unit 62 can be executed by Central Processing Unit (CPU) or Digital Signal Processor (DSP) provided in the computer 60 to be actualized as software processing. However, the control unit 61 and the computation unit 62 are not limited to this aspect, and each processing may be configured to be actualized as hardware processing by, for example, Application Specific Integrated Circuit (ASIC), Programmable Logic Device (PLD), Field Programmable Gate Array (FPGA), or the like.

The storage unit 63 stores programs executed by the control unit 61, acquired data, and computation result thereof. The storage unit 63 includes a readable storing medium. This storing medium includes a rewritable and programmable ROM such as EPROM, EEPROM, or flash memory, another tangible storing medium such as a magnetic disk storing medium or an optical disk storing medium that can store information, or any combination thereof. The storage unit 63 may be provided integrally with the control unit 61 or may be provided in the computer 60 in which the control unit 61 is provided. Alternatively, the storage unit 63 may be a storing medium in an external storage device that can be connected to the computer 60 in which the control unit 61 is provided or may be a storage device provided at a remote location network-connected to the computer 60 via a communication unit 64.

The control unit 61 can communicate with external equipment via the communication unit 64 to send and receive data. The communication unit 64 communicates with external equipment by a communication means including, for example, wired communication such as Universal Serious Bus (USB) or Ethernet® (Ethernet is a registered trademark in Japan, other countries, or both), or wireless communication such as Bluetooth® (Bluetooth is a registered trademark in Japan, other countries, or both) or WiFi® (WiFi is a registered trademark in Japan, other countries, or both). However, the communication means is not limited to the exemplified ones, and other various communication means are available. The control unit 61 in the computer 60 may be configured to communicate with the measurement container 10 (temperature detector 11a, furnace 12), the light emitting unit 20, the temperature measuring unit 30, the function generator 40, the measurement circuit 50, etc. via the communication unit 64 to set and actuate the respective instruments and acquire various kinds of data.

A display unit 65 can display thermophysical property values or the like computed by the computation unit 62 and display a graphical user interface (GUI) for controlling the thermophysical property value measurement device 100. The display unit 65 is, for example, a liquid crystal display, an organic EL display, or the like including an input function. The display unit 65 may be provided in the computer 60 or may be an external display that can be connected to the computer 60.

The computer 60 may further include an input unit 66 that inputs a control command and a measurement parameter.

The computer 60 can be configured using, for example, a personal computer (PC).

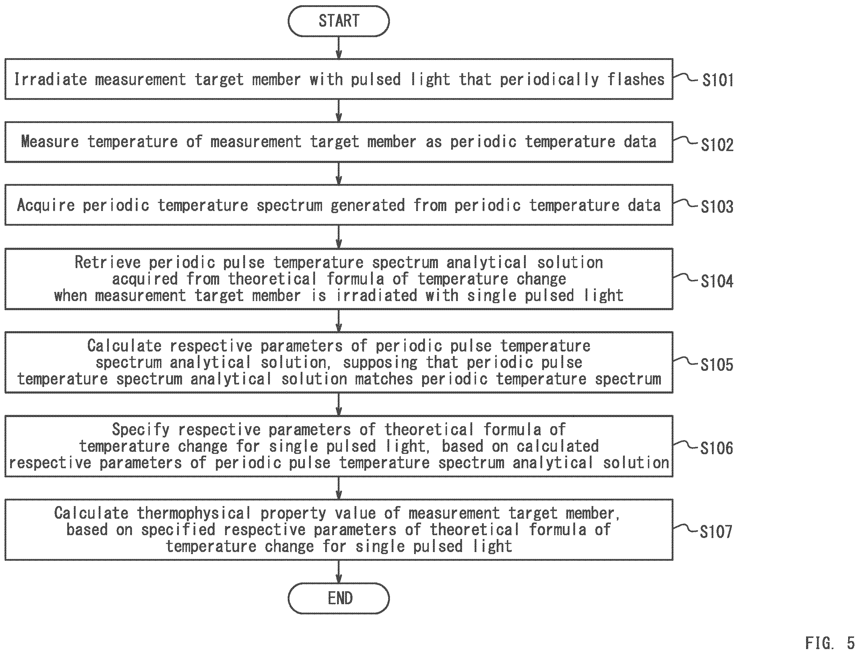

The following describes a procedure for carrying out a thermophysical property value measurement method according to this embodiment, using FIG. 5 and the subsequent drawings.

In the thermophysical property value measurement method according to this embodiment, first, one surface (lower surface in FIG. 1) of the measurement target member S is irradiated with a pulsed light that periodically flashes (see FIG. 3), which is generated by the light emitting unit 20 (step S101 in FIG. 5). The pulsed light flashes, for example, with a period 1/f (f is the frequency of the pulsed light), based on a timing signal from the function generator 40. A measurer can control temperature rise at the measurement target member S by adjusting the pulse width P by a command from the control unit 61 or adjusting the light intensity of the pulsed light.

Next, the temperature measuring unit 30, an infrared detector, detects thermal radiation from the other surface opposite to the one surface of the measurement target member S to measure the temperature of this other surface as periodic temperature data (step S102 in FIG. 5). The periodic temperature data measured in step S102 has, for example, a waveform repeated with a period $\tau_{rep}$ as illustrated in FIG. 4. The period $\tau_{rep}$ of the periodic temperature data corresponds to the period 1/f of the pulsed light. In the illustrated example, the peak temperature of the periodic temperature data is constant.

The temperature change corresponding to one pulsed light of the periodic pulsed lights has a sawtooth waveform including a steep temperature rise section Ti and a temperature fall section Td that is more moderate than the temperature rise, as illustrated in FIG. 4. The temperature rise waveform for a single pulsed light illustrated in FIG. 2B corresponds to the steep temperature rise section Ti in the sawtooth waveform in FIG. 4.

When the temperature change for each single pulsed light as illustrated in FIG. 2B is represented as $T_{single}(t)$, the temperature change $T_{rep}(t)$ in a case of periodic irradiation with a plurality of pulsed lights as illustrated in FIG. 4 can be expressed by the following mathematical formula (4) (see Reference Literatures 3 to 5).

[Mathematical 4]

$$T_{rep}(t) = \sum_{m=0}^{\infty} T_{single}(t + m\tau_{rep}) \qquad (4)$$

wherein, m is an integer of 0 or more.

(Reference Literature 3) Takahiro Baba, Tetsuya Baba, K. Ishikawa, T. Mori, "Determination of thermal diffusivity of thin films by applying Fourier expansion analysis to thermo-reflectance signal after periodic pulse heating", JOURNAL OF APPLIED PHYSICS, Volume 130, Issue 22, DOI10.1063/5.0069375.
(Reference Literature 4) JP6399329B1
(Reference Literature 5) WO2019/092898A1

When Fourier transformation is applied to the mathematical formula (4), each Fourier coefficient $X_n$ (n is an integer of 0 or more) can be expressed by the following mathematical formula (5). Here, $v_n = n/\tau_{rep}$.
[Mathematical 5]

$$X_n = \int_0^{\tau_{rep}} T_{rep}(t)\exp(-i2\pi\nu_n t)dt$$

$$= \sum_{m=0}^{\infty}\left[\int_0^{\tau_{rep}} T_{single}(t+m\tau_{rep})\exp\left(-i2\pi\frac{nt}{\tau_{rep}}\right)dt\right]$$

$$= \sum_{m=0}^{\infty}\left[\int_0^{\tau_{rep}} T_{single}(t+m\tau_{rep})\exp\left(-i2\pi\frac{n(t+m\tau_{rep})}{\tau_{rep}}\right)dt\right]$$

$$= \sum_{m=0}^{\infty}\left[\int_{m\tau_{rep}}^{(m+1)\tau_{rep}} T_{single}(t)\exp(-i2\pi\nu_n t)dt\right]$$

$$= \int_0^{\infty} T_{single}(t)\exp(-i2\pi\nu_n t)dt \qquad (5)$$

The deformation from the second line to the third line in the above mathematical formula (5) occurs by establishment of exp(-i2πnm) = 1 (n and m are each an integer of 0 or more).

Moreover, the following mathematical formula (6) is established by inverse Fourier transformation.

[Mathematical 6]

$$T_{rep}(t) = \sum_{n=0}^{\infty} X_n\exp(i2\pi\nu_n t) \qquad (6)$$

According to the mathematical formula (5), a temperature spectrum analytical solution of the other surface when one surface of the measurement target member S is irradiated with a single pulsed light (last line in mathematical formula (5)) matches a periodic temperature spectrum of the other surface when one surface of the measurement target member S is irradiated with a pulsed light that periodically flashed (first line in mathematical formula (5)).

The upper left graph (a) in FIG. 6 illustrates a time axis waveform (for about one period) of periodic temperature change of the other surface when one surface of the measurement target member S is irradiated with the pulsed light that periodically flashes, which is measured by the temperature measuring unit 30. In the upper right in the graph (a), it is illustrated a graph in which the time axis in the rising section is expanded. The computation unit 62 applies Analog-to-digital (A/D) conversion to the time axis waveform of periodic temperature illustrated in graph (a) and then applies Fourier transformation by fast Fourier transform (FFT), thus generating and acquiring a periodic temperature spectrum illustrated in the upper right graph (b) in FIG. 6 (step S103 in FIG. 5).

In the above example, the computation unit 62 is configured to apply Fourier transformation to the time axis waveform of the periodic temperature by FFT to generate a periodic temperature spectrum. However, the computation unit 62 is not limited to this aspect. The computation unit 62 may be configured to acquire a periodic temperature spectrum generated such that a spectrum analyzer applies Fourier transformation to the time axis waveform of periodic temperature. With this configuration, a frequency spectrum of temperature response can be directly generated without acquiring a time axis signal. Therefore, it is possible to speed up the measurement and eliminate the need for an A/D converter, a digital oscilloscope, or a lock-in amplifier to simplify the configuration of the device.

On the other hand, the lower left graph (c) in FIG. 6 illustrates a theoretical formula of temperature change of the other surface when one surface of the measurement target member S is irradiated with a single pulsed light, with a time axis waveform. In the upper right in the graph (c), it is illustrated a graph in which the time axis in the rising section is expanded. The theoretical formula of temperature change of the other surface when one surface of the measurement target member S is irradiated with this single pulsed light can be expressed by the above mathematical formula (1).

In the lower right graph (d) in FIG. 6 and the following theoretical formula (mathematical formula (7)) acquired by applying Laplace transformation to the theoretical formula (mathematical formula (1)) in the graph (c) in FIG. 6, a periodic pulse temperature spectrum analytical solution as presented in the following mathematical formula (8) can be acquired by replacing ξ with i2πν$_n$. The computation unit 62 retrieves the periodic pulse temperature spectrum analytical solution from the storage unit 63 (step S104 in FIG. 5).
[Mathematical 7]

$$\tilde{T}(\xi) = \frac{2}{b\sqrt{\xi}} \cdot \frac{\exp\left(-\sqrt{\tau_0 \xi}\right)}{1 - \exp\left(-2\sqrt{\tau_0 \xi}\right)} \qquad (7)$$

[Mathematical 8]

$$\tilde{T}(v_n) = \frac{2}{b\sqrt{i2\pi v_n}} \cdot \frac{\exp\left(-\sqrt{i2\pi v_n \tau_0}\right)}{1 - \exp\left(-2\sqrt{i2\pi v_n \tau_0}\right)} \qquad (8)$$

The computation unit 62 calculates respective parameters b and $\tau_0$ of the periodic pulse temperature spectrum analytical solution, supposing that the periodic pulse temperature spectrum analytical solution retrieved in step S104 matches the periodic temperature spectrum generated in step S103 (step S105 in FIG. 5). These respective parameters of the periodic pulse temperature spectrum analytical solution can be calculated by performing fitting so that the periodic pulse temperature spectrum analytical solution in the mathematical formula (8) matches the periodic temperature spectrum in the graph (b) in FIG. 6, for example, by the least squares method.

Next, the computation unit 62 specifies respective parameters (b, $\tau_0$) of the theoretical formula of temperature change of the other surface for the single pulsed light in the graph (c) in FIG. 6 and the mathematical formula (1), based on the calculated respective parameters of the periodic pulse temperature spectrum analytical solution (step S106 in FIG. 5). Respective parameter b and $\tau_0$ of the periodic pulse temperature spectrum analytical solution calculated in step S105 and respective parameter b and $\tau_0$ of the theoretical formula of temperature change of the other surface for the single pulsed light identified in step S106 are identical.

Next, the computation unit 62 calculates a thermophysical property value of the measurement target member S, based on the specified respective parameters of the theoretical formula of temperature change of the other surface for the single pulsed light (step S107 in FIG. 5). The computation unit 62, when calculating a thermal diffusivity as the thermophysical property value, assigns the thickness d of the measurement target member S and the characteristic time $\tau_0$ of thermal diffusion specified in step S106 to the mathematical formula (3) to calculate a thermal diffusivity $\alpha$.

Moreover, the computation unit 62, when calculating a thermal conductivity as the thermophysical property value, calculates a thermal conductivity $\lambda$ by a mathematical formula $\lambda = \alpha c \rho$. Here, c is a specific heat capacity, and $\rho$ is a density.

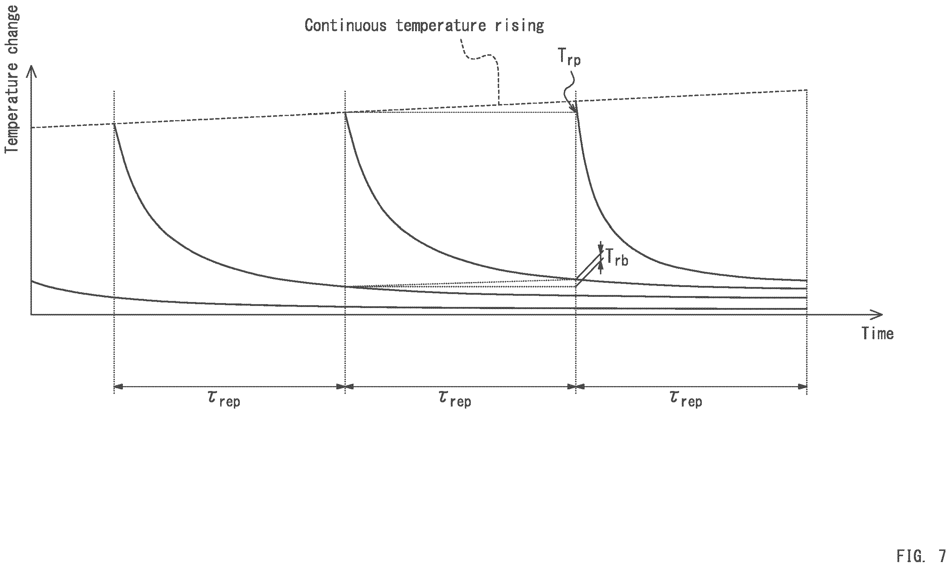

The peak temperature of the periodic temperature data is defined as constant but is not limited to this aspect. For example, as illustrated in FIG. 7, when the temperature data for each period of the periodic temperature data drifts, the drift of the periodic temperature data may be corrected. The correction of drift in the description and claims of this application includes a temperature change of the measurement target member S that is not intended by the measurer such as a case where the peak temperature of the measurement target member S gradually rises by irradiating the measurement target member S with a pulsed light that periodically flashes, as well as a temperature change when measuring the temperature of the measurement target member S while intentionally changing the measurement target member S as described below.

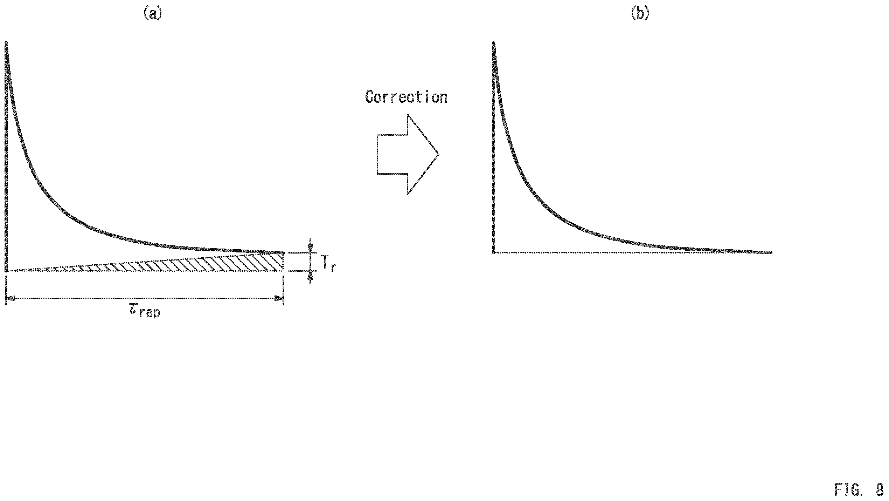

For the above correction of the periodic temperature data, the periodic temperature data may be corrected so that a temperature rise $T_r$ after a lapse of one period, for example, illustrated in (a) of FIG. 8 is 0.

For this correction of the periodic temperature data, it can be performed a correction that deducts a shaded area from the periodic temperature data so that the temperature rise $T_r$ during the time (period) $\tau_{rep}$, for example, illustrated in (a) of FIG. 8 is 0 (The periodic temperature data after the correction for one period is illustrated as (b) in FIG. 8.). That is, the periodic temperature data is corrected by providing an amount of correction that linearly varies with time. The temperature rise $T_r$ may be detected as, for example, a temperature rise $T_{rp}$ of the peak temperature during the time (period) $\tau_{rep}$ in FIG. 7. Alternatively, a temperature rise $T_{rb}$ at a timing immediately before the subsequent steep temperature rise is initiated may be used for the temperature rise $T_r$. Moreover, the rising value of the mean temperature during one period may be used as the temperature rise $T_r$.

When the thermophysical property value of the measurement target member S is calculated while intentionally changing the temperature in the furnace 12 (heating unit), the control unit 61 may calculate the temperature rise $T_r$ during the time (period) $\tau_{rep}$ from a low frequency component in the temperature change of the measurement target member S, which is acquired from the temperature detector 11a. Then, the temperature rise $T_r$ acquired from the temperature detector 11a may correct the periodic temperature data.

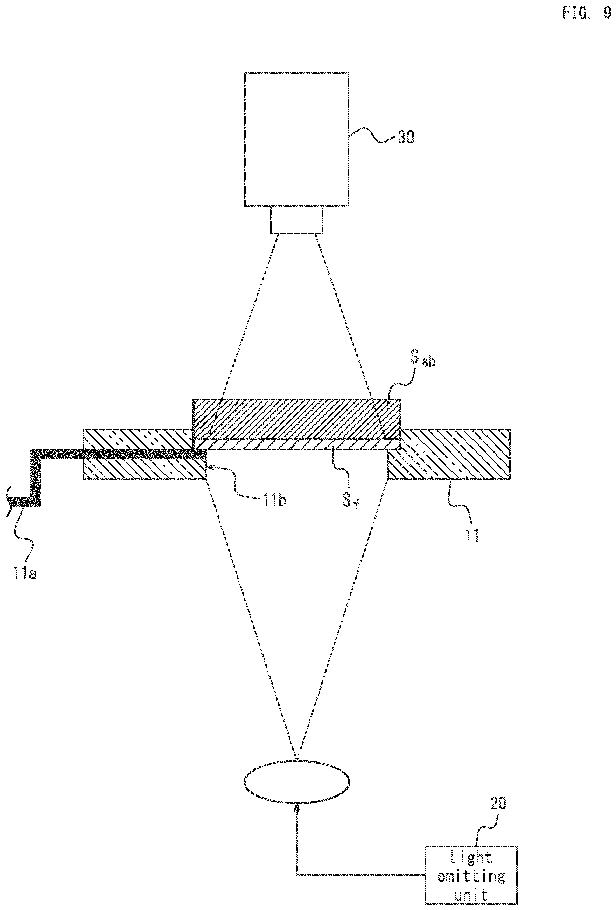

In this embodiment, it has been described that the measurement target member S is a bulk (thick film) without using a substrate. However, the measurement target member S is not limited to this aspect. For example, as illustrated in FIG. 9, instead of the bulk measurement target member S, it may be employed a configuration in which a measurement target member Sf is located on a substrate $S_{sb}$ thicker than the measurement target member Sf. In the case of FIG. 9, the measurement target member Sf side (lower side in FIG. 9) is irradiated with periodic pulsed lights, and the temperature of the measurement target member $S\epsilon$ is measured by the temperature measuring unit 30 from the substrate $S_{sb}$ side (upper side in FIG. 9). The measurement target member $S\epsilon$ may be a bulk (thick film) defined herein or a thin film, located on the substrate $S_{sb}$.

When the configuration in FIG. 9 is used, the temperature change T(t) corresponding to the mathematical formula (1) is upward based on the theoretical formula presented in the following mathematical formula (9).

[Mathematical 9]

$$T(t) = \frac{2}{(b_f + b_s)\sqrt{\pi t}} \sum_{n=0}^{\infty} \exp\left(-(2n+1)^2 \frac{\tau_f}{4t}\right) \quad (9)$$

wherein $\tau_f$ is a characteristic time of thermal diffusion for the measurement target member Sf located on the substrate $S_{sb}$, n is an integer of 0 or more, $b\epsilon = \sqrt{(\lambda_f c_f \rho_f)}$ is a thermal effusivity of the measurement target member $S\epsilon$, $b_s$ is a thermal effusivity of the substrate $S_{sb}$, and $\lambda_f$, $c_f$, and $\rho_f$ are a thermal conductivity, a specific heat capacity, and a density of the measurement target member $S\epsilon$, respectively.

A mathematical formula (10) is acquired by applying Laplace transformation to the mathematical formula (9).

[Mathematical 10]

$$\tilde{T}(\xi) = \frac{2}{(b_f + b_s)\sqrt{\xi}} \cdot \frac{\exp\left(-\sqrt{\tau_f \xi}\right)}{1 - \gamma \cdot \exp\left(-2\sqrt{\tau_f \xi}\right)} \quad (10)$$

wherein, for $\gamma$, $\gamma = (b_f - b_s)/(b_f + b_s)$.

In the mathematical formula (10), a periodic pulse temperature spectrum analytical solution can be acquired as presented in the following mathematical formula (11) by replacing $\xi$ with $i2\pi v_n$.

[Mathematical 11]

$$\tilde{T}(v_n) = \frac{2}{(b_f + b_s)\sqrt{i2\pi v_n}} \cdot \frac{\exp\left(-\sqrt{i2\pi v_n \tau_f}\right)}{1 - \gamma \cdot \exp\left(-2\sqrt{i2\pi v_n \tau_f}\right)} \quad (11)$$

When the thermophysical property value of the measurement target member Sf is measured, in step S104 in FIG. 5, instead of the mathematical formula (8), the periodic pulse temperature spectrum analytical solution expressed by the mathematical formula (11) is retrieved, and then, respective parameters $b\epsilon$ and $\tau_f$ of the periodic pulse temperature spectrum analytical solution may be calculated, supposing that the periodic pulse temperature spectrum analytical solution expressed by the mathematical formula (11) matches the periodic temperature spectrum generated in step S103 (step S105 in FIG. 5).

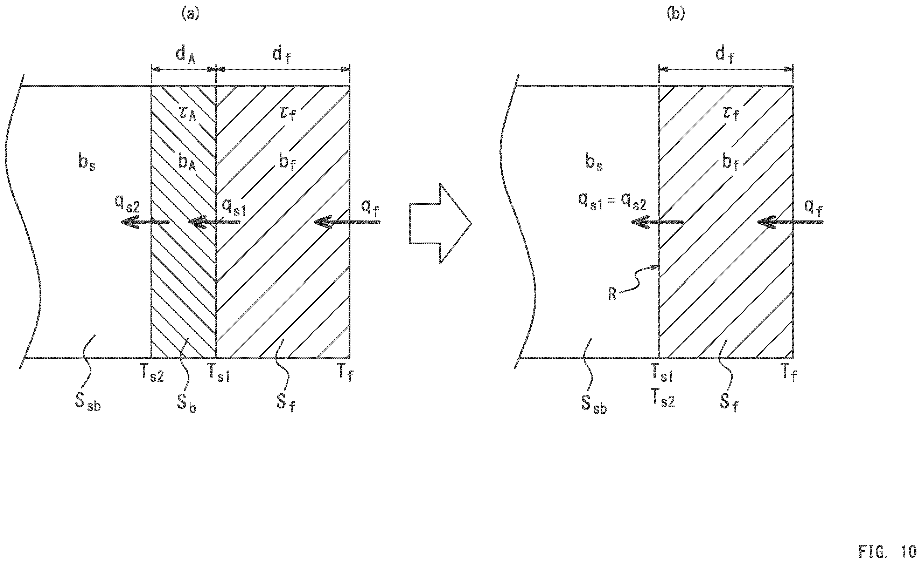

Next, as illustrated in FIG. 9, when the measurement target member Sf is located on the substrate $S_{sb}$ to calculate the thermophysical property value, a thermal resistance between the substrate $S_{sb}$ and the measurement target member Sf is examined. As illustrated in (a) of FIG. 10, a virtual boundary layer $S_b$ is introduced between the substrate $S_{sb}$ and the measurement target member Sf. Here, the temperature at the interface between the measurement target member Sf and the substrate $S_{sb}$ is defined as $T_s$, the heat flow density across the surface of the measurement target member Sf is defined as $q_f$, the heat flow density across the interface is defined as $q_s$, and their Laplace transformations are written in the drawing. Furthermore, the temperature and the heat flow density at the interface on the measurement target member Sf side of the boundary layer $S_b$ are defined as $T_{s1}$ and $q_{s1}$, respectively, and the temperature and the heat flow density at the interface on the substrate $S_{sb}$ side are defined as $T_{s2}$ and $q_{s2}$, respectively. The relation between the temperature and the heat flow density is expressed by a mathematical formula (12) through cascade connection of the four-terminal matrix of their Laplace transformations (see Reference Literature 6). (Reference Literature 6) Takahiro Baba, Tetsuya Baba, T. Mori, "Development of Fourier Transform Ultrafast Laser Flash Method for Simultaneous Measurement of Thermal Diffusivity and Interfacial Thermal Resistance", International Journal of Thermophysics, 2024, 45(2), 27.

[Mathematical 12]

$$\begin{bmatrix} \widetilde{q_{s2}}(\xi) \\ \widetilde{T}_{s2}(\xi) \end{bmatrix} = \begin{bmatrix} \cosh\left(\sqrt{\tau_A \xi}\right) & -b_A\sqrt{\xi}\sinh\left(\sqrt{\tau_A \xi}\right) \\ -\dfrac{1}{b_A\sqrt{\xi}}\sinh\left(\sqrt{\tau_A \xi}\right) & \cosh\left(\sqrt{\tau_A \xi}\right) \end{bmatrix}$$

$$\cdot \begin{bmatrix} \cosh\left(\sqrt{\tau_f \xi}\right) & -b_f\sqrt{\xi}\sinh\left(\sqrt{\tau_f \xi}\right) \\ -\dfrac{1}{b_f\sqrt{\xi}}\sinh\left(\sqrt{\tau_f \xi}\right) & \cosh\left(\sqrt{\tau_f \xi}\right) \end{bmatrix} \cdot \begin{bmatrix} \widetilde{q_f}(\xi) \\ \widetilde{T}_f(\xi) \end{bmatrix} \quad (12)$$

wherein $\tau_f = d_f^2/\alpha_f$ is a thermal diffusion time of the entire measurement target member $S_f$, $d_f$ is a thickness of the measurement target member $S_f$, $\alpha_f$ is a thermal diffusivity of the measurement target member $S_f$, $b_f$ is a thermal effusivity of the measurement target member $S_f$, $\xi$ is a complex variable, $\tau_A = d_A^2/\alpha_A$ is a thermal diffusion time of the entire boundary layer $S_b$, $d_A$ is a thickness of the boundary layer $S_b$, $\alpha_A$ is a thermal diffusivity of the boundary layer $S_b$, and $b_A$ is a thermal effusivity of the boundary layer $S_b$. When the thickness of the boundary layer $S_b$ is zero and the thermal conductivity is infinitely small, the component of the four-terminal matrix, which represents the boundary layer $S_b$, converges to values presented in the following mathematical formulas (13) to (15).

[Mathematical 13]

$$\lim_{d_A \to 0,\ \lambda_A \to 0} \cosh\left(\sqrt{\tau_A \xi}\right) = 1 \quad (13)$$

[Mathematical 14]

$$\lim_{d_A \to 0,\ \lambda_A \to 0} b_A\sqrt{\xi}\sinh\left(\sqrt{\tau_A \xi}\right) = 0 \quad (14)$$

[Mathematical 15]

$$\lim_{d_A \to 0,\ \lambda_A \to 0} \frac{\sinh\left(\sqrt{\tau_A \xi}\right)}{b_A\sqrt{\xi}} = \lim_{d_A \to 0,\ \lambda_A \to 0} \frac{\sqrt{\tau_A}}{b_A} = \lim_{d_A \to 0, \lambda_A \to 0} \frac{d_A/\sqrt{\alpha_A}}{\sqrt{\alpha_A}c_A\rho_A}$$

$$= \lim_{d_A \to 0,\ \lambda_A \to 0} \frac{d_A}{\lambda_A} = R \quad (15)$$

wherein $c_A$ is a specific heat capacity of the boundary layer $S_b$, $\rho_A$ is a density of the boundary layer $S_b$, and R is a thermal resistance of the boundary layer $S_b$. This result is assigned to the mathematical formula (12) to acquire the following mathematical formula (16).

[Mathematical 16]

$$\begin{bmatrix} \widetilde{q_{s2}}(\xi) \\ \widetilde{T}_{s2}(\xi) \end{bmatrix} = \begin{bmatrix} 1 & 0 \\ -R & 1 \end{bmatrix} \cdot \begin{bmatrix} \cosh\left(\sqrt{\tau_f \xi}\right) & -b_f\sqrt{\xi}\sinh\left(\sqrt{\tau_f \xi}\right) \\ -\dfrac{1}{b_f\sqrt{\xi}}\sinh\left(\sqrt{\tau_f \xi}\right) & \cosh\left(\sqrt{\tau_f \xi}\right) \end{bmatrix} \cdot \begin{bmatrix} \widetilde{q_f}(\xi) \\ \widetilde{T}_f(\xi) \end{bmatrix} \quad (16)$$

When the thickness of the substrate $S_{sb}$ is considered to be semi-infinite, a Laplace transformation $\widetilde{T}_{s2}(\xi)$ of the substrate terminal temperature and a Laplace transformation $\widetilde{q_{s2}}(\xi)$ of the inpouring heat flow density has a relation expressed by the following mathematical formula (17).

[Mathematical 17]

$$\widetilde{T_{s2}}(\xi) = \frac{1}{b_s\sqrt{\xi}} \times \widetilde{q_{s2}}(\xi) \qquad (17)$$

When the surface of the measurement target member Sf is heated by a pulsed light, since $q_f(t)$ is a delta function $\delta(t)$, for its Laplace transformation, $\widetilde{q_f}(\xi) = 1$ . The mathematical formulas (16) and (17) are solved as a simultaneous equation to acquire the following mathematical formulas (18) and (19).

[Mathematical 18]

$$\widetilde{T_{s2}}(\xi) = \frac{1}{b_f\sqrt{\xi}} \times \frac{1}{\left(1 + Rb_s\sqrt{\xi}\right)\sinh\left(\sqrt{\tau_f\xi}\right) + \dfrac{b_s}{b_f}\cosh\left(\sqrt{\tau_f\xi}\right)} \qquad (18)$$

[Mathematical 19]

$$\widetilde{q_{s2}}(\xi) = \frac{1}{b_f\sqrt{\xi}} \times \frac{b_s\sqrt{\xi}}{\left(1 + Rb_s\sqrt{\xi}\right)\sinh\left(\sqrt{\tau_f\xi}\right) + \dfrac{b_s}{b_f}\cosh\left(\sqrt{\tau_f\xi}\right)} \qquad (19)$$

Moreover, the following mathematical formula (20) is acquired from the mathematical formulas (18) and (19).
[Mathematical 20]

$$\widetilde{T_{s1}}(\xi) = \widetilde{T_{s2}}(\xi) + R\widetilde{q_{s2}}(\xi)$$

$$= \frac{1}{b_f\sqrt{\xi}} \times \frac{1 + Rb_s\sqrt{\xi}}{\left(1 + Rb_s\sqrt{\xi}\right)\sinh\left(\sqrt{\tau_f\xi}\right) + \dfrac{b_s}{b_f}\cosh\left(\sqrt{\tau_f\xi}\right)} \qquad (20)$$

The mathematical formula (20) represented by the exponential function will be the following mathematical formula (21).
[Mathematical 21]

$$\widetilde{T_{s1}}(\xi) = \frac{1}{b_f\sqrt{\xi}} \times \frac{\left(1 + \dfrac{\gamma + \sqrt{\tau_r\xi}}{1 + \sqrt{\tau_r\xi}}\right)\exp\left(-\sqrt{\tau_f\xi}\right)}{1 - \dfrac{\gamma + \sqrt{\tau_r\xi}}{1 + \sqrt{\tau_r\xi}}\exp\left(-2\sqrt{\tau_f\xi}\right)} \qquad (21)$$

wherein $\tau_r = R^2\left(\dfrac{b_f b_s}{b_f + b_s}\right)^2$ is a characteristic time of cooling by the interface thermal resistance, and $\gamma = \dfrac{b_f - b_s}{b_f + b_s}$ is a ratio of the virtual heat source intensity.

The measurement in this embodiment is performed by not single pulse heating but periodic pulse heating, and the lower limit of the frequency of a signal is a repetition frequency of 1 Hz. Moreover, the time interval for sampling a signal has a lower limit, and the signal frequency thus has an upper limit. In the date in this embodiment, the sampling frequency is 50 kHz.

The signal is acquired at regular intervals over 1 Hz. of the pulse repetition interval and thus can be expanded by Fourier series. By consideration of the periodicity of Fourier series, the analysis formula of a complex Fourier coefficient is determined by assigning an imaginary multiple $i\omega$ of the angular frequency to a function, $\xi$, in the Laplace space. This corresponds to the fact that, if the discrete value on the imaginary axis of the analytical function is determined in the complex function theory, it is possible to apply analytic continuation to the entire complex plane. When the angular frequency ($\omega = 2\pi\nu_n$) of Fourier series is represented by a frequency, after periodic pulse heating, the following mathematical formula (22) is acquired as a mathematical formula corresponding to the mathematical formula (21).
[Mathematical 22]

$$\widetilde{T_{s1}}(i2\pi v_n) = \frac{1}{b_f\sqrt{\xi}} \times \frac{\left(1 + \dfrac{\gamma + \sqrt{i2\pi v_n \tau_r}}{1 + \sqrt{i2\pi v_n \tau_r}}\right)\exp\left(-\sqrt{i2\pi v_n \tau_f}\right)}{1 - \dfrac{\gamma + \sqrt{i2\pi v_n \tau_r}}{1 + \sqrt{i2\pi v_n \tau_r}}\exp\left(-2\sqrt{i2\pi v_n \tau_f}\right)} \qquad (22)$$

At this time, ($\alpha_f$, $b_f$, $b_s$, and R are determined from the following mathematical formulas (23) to (26). In this embodiment, respective thermophysical property values are calculated assuming that $b_s$ is known.
[Mathematical 23]

$$\alpha_f = \frac{d_f{}^2}{\tau_f} \qquad (23)$$

[Mathematical 24]

$$b_f = \sqrt{\alpha_f}\, c_f \rho_f \qquad (24)$$

[Mathematical 25]

$$b_s = b_f \frac{1 - \gamma}{1 + \gamma} \qquad (25)$$

[Mathematical 26]

$$R = \sqrt{\tau_r}\,\frac{b_f + b_s}{b_f b_s} \qquad (26)$$

In the mathematical formula (24), $c_f$ is a specific heat capacity of the measurement target member S$\varepsilon$, and $\rho_f$ is a density of the measurement target member S$\varepsilon$.

In the measurement, the surface (position of the temperature Tf) of the measurement target member S$\varepsilon$ in FIG. 10 is subjected to periodic pulse heating, and the temperature of the interface (position of the temperature Tsi) between the measurement target member Sf and the substrate $S_{sb}$ is measured. In this case, the substrate $S_{sb}$ is preferably formed of a material through which an infrared light for temperature measuring from the temperature measuring unit 30 passes. However, the substrate $S_{sb}$ is not limited to this aspect. The substrate $S_{sb}$ may be formed of a material through which an infrared light for temperature measuring does not pass but a pulsed light for heating the measurement target member S$\varepsilon$ passes. In this case, it is preferred that the substrate $S_{sb}$ side is irradiated the pulsed light for heating, and the temperature measuring unit 30 measures the temperature of the measurement target member S$\varepsilon$ from the side opposite to the substrate $S_{sb}$.

When the thermophysical property value is calculated in this model considering the boundary layer $S_b$ between the substrate $S_{sb}$ and the measurement target member S$\varepsilon$, in step S104 in FIG. 5, instead of the mathematical formula (8), the periodic pulse temperature spectrum analytical solution expressed by the mathematical formula (22) may be retrieved. Then, supposing that the periodic pulse temperature spectrum analytical solution expressed by the mathematical formula (22) matches the periodic temperature spectrum generated in step S103 in FIG. 5, the respective parameters of the periodic pulse temperature spectrum analytical solution may be calculated by performing fitting, for example, by the least squares method, etc. (step S105 in FIG. 5).

The periodic temperature curve varies depending on $\gamma$ and $\tau_r$ in the mathematical formula (22). More specifically, the periodic temperature curve draws curves with different shapes when $\gamma$ varies and when $\tau_r$ varies. Therefore, from the shape of the observed periodic temperature curve, $\gamma$ and $\tau_r$ can be simultaneously determined.

After $\gamma$, $\tau_r$, and $\tau_f$ in the mathematical formula (22) are determined, the computation unit 62 can calculate $\alpha_f$ based on the mathematical formula (23). Moreover, b$\varepsilon$ can be determined based on the mathematical formula (25) and $b_s$, which

is known. Furthermore, R can be determined based on the mathematical formula (26).

The computation unit 62 also can calculate both of a heat capacity $C_f$ per unit volume and a thermal conductivity $\lambda_f$ in the thickness direction, as the thermophysical property values of the measurement target member $S\varepsilon$, based on the following mathematical formulas (27) and (28).

[Mathematical 27]

$$C_f = \sqrt{\lambda_f C_f / (\lambda_f / C_f)} = b_f / \sqrt{\alpha_f} \quad (27)$$

[Mathematical 28]

$$\lambda_f = \sqrt{\lambda_f C_f \cdot (\lambda_f / C_f)} = b_f \cdot \sqrt{\alpha_f} \quad (28)$$

Here, the heat capacity $C_f$ per unit volume of the measurement target member $S\varepsilon$ is expressed by the following mathematical formula (29) using a specific heat capacity $c_f$ of the measurement target member $S\varepsilon$ and a density $\rho_f$ of the measurement target member Sf.

[Mathematical 29]

$$C_f = c_f \rho_f \quad (29)$$

The calculation of the thermophysical property value by the mathematical formula (22) considering the interface thermal resistance preferably uses a bulk as the measurement target member $S\varepsilon$ from a viewpoint of measurement accuracy. However, the measurement target member Sf is not limited to this aspect. A thin film may be used as the measurement target member $S_f$.

As described above, this embodiment is configured such that a thermophysical property value measurement device 100 includes: a light emitting unit 20 that irradiates a measurement target member S with a pulsed light that periodically flashes; a temperature measuring unit 30 that measures a temperature of the measurement target member S; and a computation unit 62 that computes periodic temperature data from the temperature measuring unit 30, and the computation unit 62 generates a periodic temperature spectrum from the periodic temperature data, retrieves a periodic pulse temperature spectrum analytical solution acquired from a theoretical formula of temperature change when the measurement target member S is irradiated with a single pulsed light, calculates respective parameters of the periodic pulse temperature spectrum analytical solution, supposing that the periodic pulse temperature spectrum analytical solution matches the periodic temperature spectrum, and calculates a thermophysical property value of the measurement target member S, based on the calculated respective parameters of the periodic pulse temperature spectrum analytical solution. By adopting such a configuration, in measurement of the thermophysical property value by a flash method, irradiating one surface of the measurement target member S with a plurality of pulsed lights that periodically flash can increase the signal strength of temperature change, which periodically varies, of the other surface to increase the S/N ratio. Therefore, the measurement accuracy of the thermophysical property value such as a thermal diffusivity can be enhanced.

In this embodiment, as described above, the S/N ratio of the measurement signal can be increased. Thus, the peak light intensity of the pulsed light with which the measurement target member S is irradiated can be decreased to reduce the energy applied to the measurement target member S, thus suppressing the damage to the measurement target member S. Moreover, the temperature rise in the measurement target member S can be suppressed. Thus, the temperature can be measured under certain conditions to suppress the effect of temperature dependence of the thermophysical property value.

This embodiment is also configured such that the computation unit 62 acquires a periodic temperature spectrum generated by applying fast Fourier transformation to the periodic temperature data or inputting the periodic temperature data to a spectrum analyzer. In particular, when the spectrum analyzer is used, it is possible to speed up the measurement and eliminate the need for an A/D converter, a digital oscilloscope, or a lock-in amplifier to simplify the configuration of the device.

This embodiment is also configured such that the computation unit 62 corrects drift of the periodic temperature data. By adopting such a configuration, even if a moderate temperature change (drift) of the measurement target member S, which is not intended by the user, occurs, this temperature change can be corrected to reduce measurement error. It is also possible to reduce measurement error when a moderate temperature change is intentionally provided to the measurement target member S.

This embodiment is also configured such that the computation unit 62 provides an amount of correction that linearly varies with time, to the periodic temperature data under continuous temperature rising or under continuous temperature falling of the measurement target member S to correct the periodic temperature data. In particular, in the Fourier transformation flash method according to the disclosure of this application, the observation time for one period is short due to periodic pulse heating. Thus, as illustrated in FIG. 7, performing a correction that linearly varies with time, approximate to the sample temperature change under continuous temperature rising can replicate a signal equivalent to the one acquired in a state where the temperature is constant. Therefore, the thermophysical property value can be accurately measured even under continuous temperature rising or under continuous temperature falling of the measurement target member S.

This embodiment is also configured such that the thermophysical property value measurement device 100 further includes: a heating unit (furnace 12) that heats the measurement target member S; and a control unit 61 that controls the heating unit, the control unit 61 changes the temperature of the measurement target member S by control of the heating unit, and the computation unit 62 corrects the periodic temperature data based on a low frequency component in the temperature change of the measurement target member S. By adopting such a configuration, the thermophysical property value can be measured while intentionally changing the temperature of the measurement target member S. Therefore, the temperature dependence of the thermophysical property value of the measurement target member S can be easily quantified.

This embodiment is also configured such that a measurement target member Sf is located on a substrate $S_{sb}$, the periodic pulse temperature spectrum analytical solution includes a parameter that represents an interface thermal resistance between the substrate $S_{sb}$ and the measurement target member $S_\varepsilon$, and under a condition that the thermal effusivity of the substrate $S_{sb}$ is known, the computation unit 62 calculates at least one of the heat capacity per unit volume and the thermal conductivity in the thickness direction, as a thermophysical property value of the measurement target member $S_\varepsilon$, which is a bulk. By adopting such a configuration, the heat capacity per unit volume and the thermal conductivity in the thickness direction considering the interface thermal resistance between the substrate $S_{sb}$ and the measurement target member $S_\varepsilon$ can be calculated with high accuracy.

This embodiment is also configured such that a thermophysical property value measurement method includes: irradiating a measurement target member S with a pulsed light that periodically flashes; measuring a temperature of the measurement target member S as periodic temperature data; generating a periodic temperature spectrum from the periodic temperature data; retrieving a periodic pulse temperature spectrum analytical solution acquired from a theoretical formula of temperature change when irradiating the measurement target member S with a single pulsed light; calculating respective parameters of the periodic pulse temperature spectrum analytical solution, supposing that the periodic pulse temperature spectrum analytical solution matches the periodic temperature spectrum; and calculating a thermophysical property value of the measurement target member, based on the calculated respective parameters of the periodic pulse temperature spectrum analytical solution. By adopting such a configuration, in measurement of the thermophysical property value by a flash method, irradiating one surface of the measurement target member S with a plurality of pulsed lights that periodically flash can increase the signal strength of temperature change, which periodically varies, of the other surface to increase the S/N ratio. Therefore, the measurement accuracy of the thermophysical property value such as a thermal diffusivity can be enhanced.

Although the present disclosure has been described with reference to the drawings and examples, it will be appreciated by a skilled person that various modifications or alterations may be made based on the present disclosure. Therefore, it should be noted that such modifications or alterations are within the scope of the present invention. For example, the functions included in each component and each step may be rearranged without being logically inconsistent, and a plurality of components and steps may be combined into one or divided.

For example, this embodiment is configured such that one surface of the measurement target member S is irradiated with a pulsed light that periodically flashes, and the temperature of the other surface opposite to the one surface of the measurement target member S is measured as periodic temperature data. However, this embodiment is not limited to this aspect. It may be configured such that one surface of the measurement target member S is irradiated with a pulsed light that periodically flashes, and the temperature of the one surface of the measurement target member S is measured as periodic temperature data.

REFERENCE SIGNS LIST

| | |
|---|---|
| 10 | measurement container |
| 10a | incidence opening |
| 10b | backside opening |
| 11 | sample holder |
| 11a | temperature detector |

| 11b | opening |
| 12 | furnace (heating unit) |
| 13 | opening plate |
| 13a | opening |
| 20 | light emitting unit |
| 30 | temperature measuring unit |
| 40 | function generator |
| 50 | measurement circuit |
| 60 | computer |
| 61 | control unit |
| 62 | computation unit |
| 63 | storage unit |
| 64 | communication unit |
| 65 | display unit |
| 66 | input unit |
| 100 | thermophysical property value measurement device |
| $S, S_f$ | measurement target member |
| $S_b$ | boundary layer |
| $S_{sb}$ | substrate |
| Td | temperature fall section |
| Ti | temperature rise section |
| $T_r, T_{rp}, T_{rb}$ | temperature rise |

**Claims**

1. A thermophysical property value measurement device comprising:

    a light emitting unit that irradiates a measurement target member with a pulsed light that periodically flashes;
    a temperature measuring unit that measures a temperature of the measurement target member; and
    a computation unit that computes periodic temperature data from the temperature measuring unit,
    wherein the computation unit

    acquires a periodic temperature spectrum generated from the periodic temperature data,
    retrieves a periodic pulse temperature spectrum analytical solution acquired from a theoretical formula of temperature change when irradiating the measurement target member with a single pulsed light,
    calculates respective parameters of the periodic pulse temperature spectrum analytical solution, supposing that the periodic pulse temperature spectrum analytical solution matches the periodic temperature spectrum, and
    calculates a thermophysical property value of the measurement target member, based on the calculated respective parameters of the periodic pulse temperature spectrum analytical solution.

2. The thermophysical property value measurement device according to claim 1, wherein the computation unit acquires the periodic temperature spectrum generated by applying fast Fourier transformation to the periodic temperature data or inputting the periodic temperature data to a spectrum analyzer.

3. The thermophysical property value measurement device according to claim 1 or 2, wherein the computation unit corrects drift of the periodic temperature data.

4. The thermophysical property value measurement device according to any one of claims 1 to 3, wherein the computation unit provides an amount of correction that linearly varies with time, to the periodic temperature data under continuous temperature rising or under continuous temperature falling of the measurement target member to correct the periodic temperature data.

5. The thermophysical property value measurement device according to any one of claims 1 to 3, further comprising: a heating unit that heats the measurement target member; and a control unit that controls the heating unit, wherein the control unit changes the temperature of the measurement target member by control of the heating unit, and the computation unit corrects the periodic temperature data based on a low frequency component in the temperature change of the measurement target member.

6. The thermophysical property value measurement device according to any one of claims 1 to 5,

wherein the measurement target member is located on a substrate,
the periodic pulse temperature spectrum analytical solution includes a parameter that represents an interface thermal resistance between the substrate and the measurement target member, and
under a condition that the thermal effusivity of the substrate is known, the computation unit calculates at least one of the heat capacity per unit volume and the thermal conductivity in the thickness direction, as a thermophysical property value of the measurement target member, which is a bulk.

7. A thermophysical property value measurement method comprising:

irradiating a measurement target member with a pulsed light that periodically flashes;
measuring a temperature of the measurement target member as periodic temperature data;
generating a periodic temperature spectrum from the periodic temperature data;
retrieving a periodic pulse temperature spectrum analytical solution acquired from a theoretical formula of temperature change when irradiating the measurement target member with a single pulsed light;
calculating respective parameters of the periodic pulse temperature spectrum analytical solution, supposing that the periodic pulse temperature spectrum analytical solution matches the periodic temperature spectrum; and
calculating a thermophysical property value of the measurement target member, based on the calculated respective parameters of the periodic pulse temperature spectrum analytical solution.

FIG. 1

EP 4 722 701 A1

FIG. 2A

Thickness

Single pulsed light

d

30

S

FIG. 2B

FIG. 3

FIG. 4

START

Irradiate measurement target member with pulsed light that periodically flashes — S101

Measure temperature of measurement target member as periodic temperature data — S102

Acquire periodic temperature spectrum generated from periodic temperature data — S103

Retrieve periodic pulse temperature spectrum analytical solution acquired from theoretical formula of temperature change when measurement target member is irradiated with single pulsed light — S104

Calculate respective parameters of periodic pulse temperature spectrum analytical solution, supposing that periodic pulse temperature spectrum analytical solution matches periodic temperature spectrum — S105

Specify respective parameters of theoretical formula of temperature change for single pulsed light, based on calculated respective parameters of periodic pulse temperature spectrum analytical solution — S106

Calculate thermophysical property value of measurement target member, based on specified respective parameters of theoretical formula of temperature change for single pulsed light — S107

END

FIG. 5

FIG. 6

FIG. 7

(a)

(b)

Correction

$T_r$

$\tau$ rep

FIG. 8

FIG. 9

FIG. 10

EP 4 722 701 A1

# EP 4 722 701 A1

**EUROPEAN SEARCH REPORT**

Application Number

EP 24 20 4971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/011852 A1 (MANDELIS ANDREAS [CA] ET AL) 31 January 2002 (2002-01-31) | 1-5,7 | INV.<br>G01N25/00<br>G01N25/18 |
| A | * claims 1,4,5,13 * | 6 | |
| X,D | WO 2019/092898 A1 (PICOTHERM CORP [JP]) 16 May 2019 (2019-05-16) | 1-5,7 | |
| A | * claim 4 * | 6 | |
| A | TAO N ET AL: "Simultaneous measurement of thermal conductivity and heat capacity by flash thermal imaging methods", REVIEW OF SCIENTIFIC INSTRUMENTS, AMERICAN INSTITUTE OF PHYSICS, 2 HUNTINGTON QUADRANGLE, MELVILLE, NY 11747, vol. 88, no. 6, 15 June 2017 (2017-06-15), XP012219720, ISSN: 0034-6748, DOI: 10.1063/1.4985633 [retrieved on 2017-06-15] * the whole document * | 1-7 | |

TECHNICAL FIELDS
SEARCHED (IPC)

G01N

The present search report has been drawn up for all claims

| Place of search | Date of completion of the search | Examiner |
|---|---|---|
| The Hague | 26 February 2025 | Steinmetz, Johannes |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 4971

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2025

| Patent document cited in search report | Publication date | Patent family member(s) | Publication date |
|---|---|---|---|
| US 2002011852 A1 | 31-01-2002 | NONE | |
| WO 2019092898 A1 | 16-05-2019 | US 2021080415 A1 | 18-03-2021 |
| | | WO 2019092898 A1 | 16-05-2019 |

EPO FORM P0459

For more details about this annex : see Official Journal of the European Patent Office, No. 12/82

REFERENCES CITED IN THE DESCRIPTION

**Patent documents cited in the description**

- JP 2005249427 A
- JP 6399329 B
- WO 2019092898 A1

**Non-patent literature cited in the description**

- **T. BABA** ; **A. ONO**. Improvement of the laser flash method to reduce uncertainty in thermal diffusivity measurements. *MEASUREMENT SCIENCE AND TECHNOLOGY*, vol. 12 (12), 2046-2057
- **K. SHINZATO** ; **T, BABA**. A laser flash apparatus for thermal diffusivity and specific heat capacity measurements. *JOURNAL OF THERMAL ANALYSIS AND CALORIMETRY*, vol. 64 (1), 413-422
- **T. BABA**. Analysis of One-dimensional Heat Diffusion after Light Pulse Heating by the Response Function Method. *JAPANESE JOURNAL OF APPLIED PHYSICS*, vol. 48 (5)
- **W. J. PARKER** ; **R. J. JENKINS** ; **C. P. BUTLER** ; **G. L. ABBOTT**. Flash Method of Determining Thermal Diffusivity, Heat Capacity, and Thermal Conductivity. *J. Appl. Phys.*, 1961, vol. 32, 1679
- **T. BABA** ; **N. TAKETOSHI** ; **T. YAGI**. Development of Ultrafast Laser Flash Methods for Measuring Thermophysical Properties of Thin Films and Boundary Thermal Resistances. *Jpn. J. Appl. Phys.*, 2011, vol. 50 (11), 11RA01
- **TAKAHIRO BABA** ; **TETSUYA BABA** ; **K. ISHIKAWA** ; **T. MORI**. Determination of thermal diffusivity of thin films by applying Fourier expansion analysis to thermo-reflectance signal after periodic pulse heating. *JOURNAL OF APPLIED PHYSICS*, vol. 130 (22)